Europäisches Patentamt

European Patent Office

Office européen des brevets

(19)

(11) Veröffentlichungsnummer: **0 221 071**
**B1**

(12) # EUROPÄISCHE PATENTSCHRIFT

(45) Veröffentlichungstag der Patentschrift:
**30.03.88**

(51) Int. Cl.⁴: **B 60 K 20/02**, G 05 G 9/16

(21) Anmeldenummer: **85903821.8**

(22) Anmeldetag: **19.07.85**

(86) Internationale Anmeldenummer:
**PCT/EP 85/00357**

(87) Internationale Veröffentlichungsnummer:
**WO 86/01161 (27.02.86** Gazette 86/5)

(54) **SCHALTEINRICHTUNG.**

(30) Priorität: **04.08.84 PC /EP84/002 37**

(43) Veröffentlichungstag der Anmeldung:
**13.05.87 Patentblatt 87/20**

(45) Bekanntmachung des Hinweises auf die Patenterteilung:
**30.03.88 Patentblatt 88/13**

(84) Benannte Vertragsstaaten:
**AT DE FR GB IT**

(56) Entgegenhaltungen:
**EP - A - 0 072 464**
**DE - A - 2 045 777**
**DE - B - 2 655 263**
**FR - A - 1 002 375**

(73) Patentinhaber: **ZAHNRADFABRIK FRIEDRICHSHAFEN AKTIENGESELLSCHAFT, Löwentaler Strasse 100 Postfach 2520, D-7990 Friedrichshafen 1 (DE)**

(72) Erfinder: **ACHBERGER, Gottfried, Ammernweg 3, D-7990 Friedrichshafen 1 (DE)**

(74) Vertreter: **Raue, Reimund, Zahnradfabrik Friedrichshafen AG Löwentaler Strasse 100 Postfach 2520, D-7990 Friedrichshafen 1 (DE)**

ACTORUM AG

## Beschreibung

Die Erfindung betrifft eine Schalteinrichtung nach dem Oberbegriff des Hauptanspruchs.

Es ist eine derartige Schalteinrichtung bekannt (DE-B-26 55 263).

In Fig. 1 der Zeichnung der DE-B-26 55 263 ist ein Verbindungsgestänge zwischen einer senkrecht in einem Gehäuse angeordneten Drehwelle mit einem an deren oberen Ende angeordneten Anlenkhebel und einem oberhalb der Drehwelle kardanisch an dem Gehäuse angelenkten Handschalthebel dargestellt. Die Schalt- und Wählbewegungen werden vom Handschalthebel auf die Drehwelle übertragen über eine Schaltwelle, die durch eine über Kugelgelenke mit der Schaltwelle und dem Gehäuse verbundene, nahe der Drehwelle und im wesentlichen parallel zu der Drehwelle angeordnete Gelenkstütze abgestützt wird.

Ein Verbindungsgestänge dieser Art ist möglich bei ausreichendem waagerechten Abstand zwischen dem Handschalthebel und der Drehwelle, wenn die Länge der Schaltwelle genügend gross ist im Verhältnis zur Länge des Anlenkhebels. Der Mittelpunkt des Handgriffs des Handschalthebels und der Mittelpunkt des Gelenks zwischen der Schaltstange und dem Anlenkhebel beschreiben dann im wesentlichen die gleichen räumlichen Kurven, die Verzerrung bleibt gering. Diese Verzerrung wird jedoch mit abnehmendem waagerechten Abstand zwischen dem Handschalthebel und der Drehwelle immer grösser. Bei sehr kleinem Abstand ist ein Verbindungsgestänge nach DE-B-26 55 263 nicht mehr möglich.

Der Erfindung liegt die Aufgabe zugrunde, eine Schalteinrichtung nach dem Oberbegriff des Hauptanspruchs zu schaffen, bei der ein mit sehr kleinem waagerechten Abstand zur Drehwelle 2 angeordneter Handschalthebel 10 mit möglichst wenigen Verbindungselementen mit der Drehwelle 2 verbunden ist derart, dass der Mittelpunkt des Handgriffs 31 des Handschalthebels 10 und der Mittelpunkt des Gelenks 14 am Anlenkhebel 4 mit nur geringer Verzerrung ähnliche räumliche Kurven beschreiben.

Diese Aufgabe wird mit den kennzeichnenden Merkmalen des Hauptanspruchs gelöst.

Vorteilhaft ist, dass das Verbindungsgestänge zwischen dem Handschalthebel 10 und dem Anlenkhebel 4 mit einer Koppelwelle 5 und einem Winkelhebel 7 im wesentlichen nur zwei Verbindungselemente umfasst.

Vorteilhaft ist die platzsparende Bauweise.

Durch die Verwendung von Wälzlagern 3, 6, 8, 11, 23 nach den Ansprüchen 2, 3, 4, 6 und 7 wird die Schalteinrichtung in vorteilhafter Weise besonders leichtgängig.

Durch die Abdichtung aller Gelenke 14, 21 und Wälzlager 3, 6, 8, 11, 23 nach den Ansprüchen 3, 4, 5 und 8 wird in vorteilhafter Weise eine besonders hohe Lebensdauer erreicht.

In der Zeichnung sind zwei Ausführungsbeispiele von Schalteinrichtungen nach der Erfindung dargestellt.

Es zeigen

Fig. 1 bis 6 eine Schalteinrichtung mit einem zweiten Universalgelenk 21 nach Anspruch 6,

Fig. 7 und 8 eine Schalteinrichtung mit einem zweiten Universalgelenk 21 nach Anspruch 7,

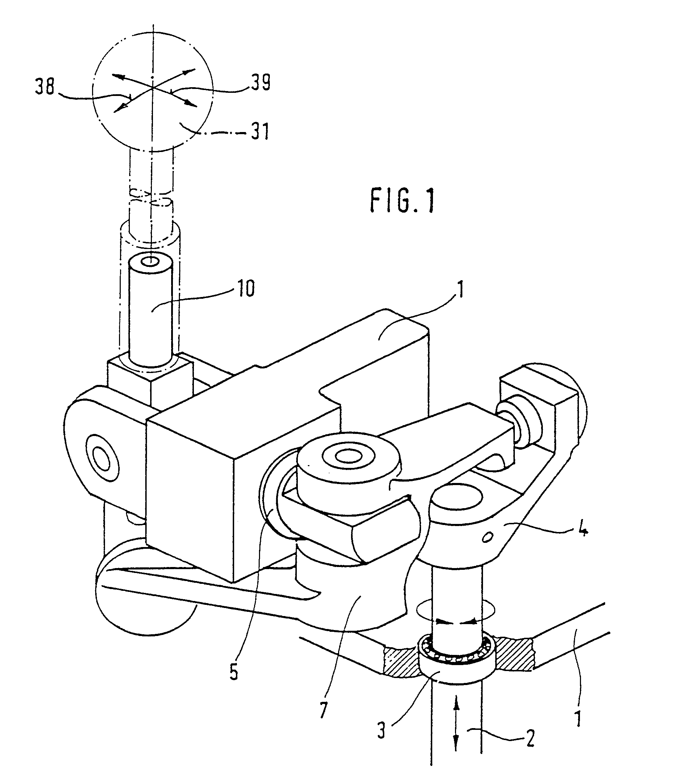

Fig. 1 eine Ansicht von schräg oben,

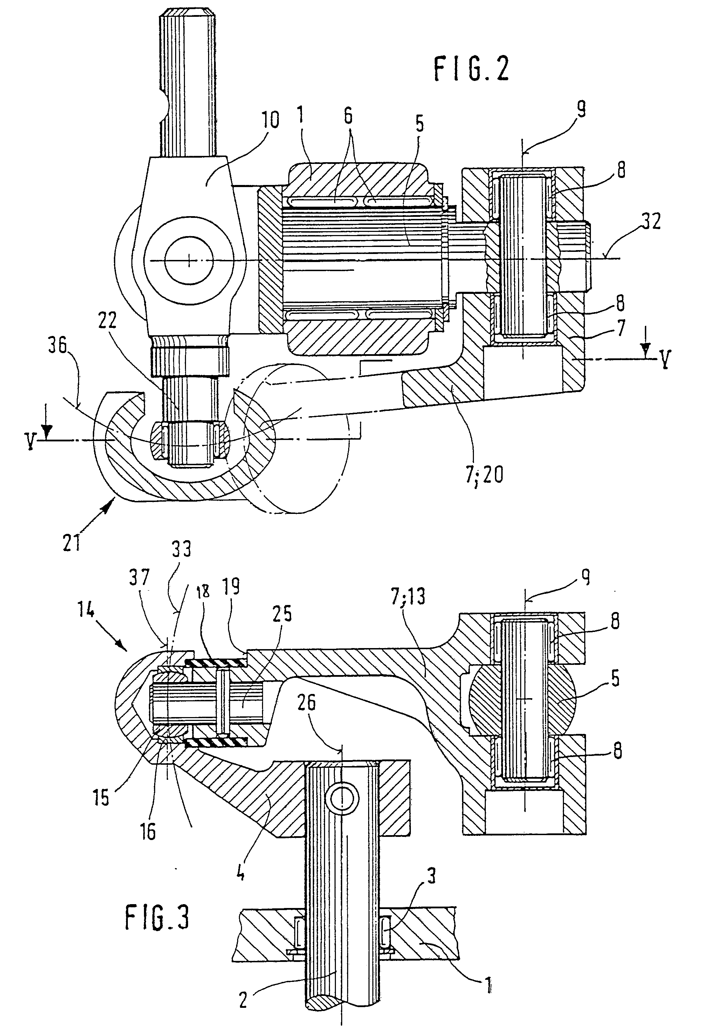

Fig. 2, 3, 6 und 8 je eine Seitenansicht, teilweise geschnitten,

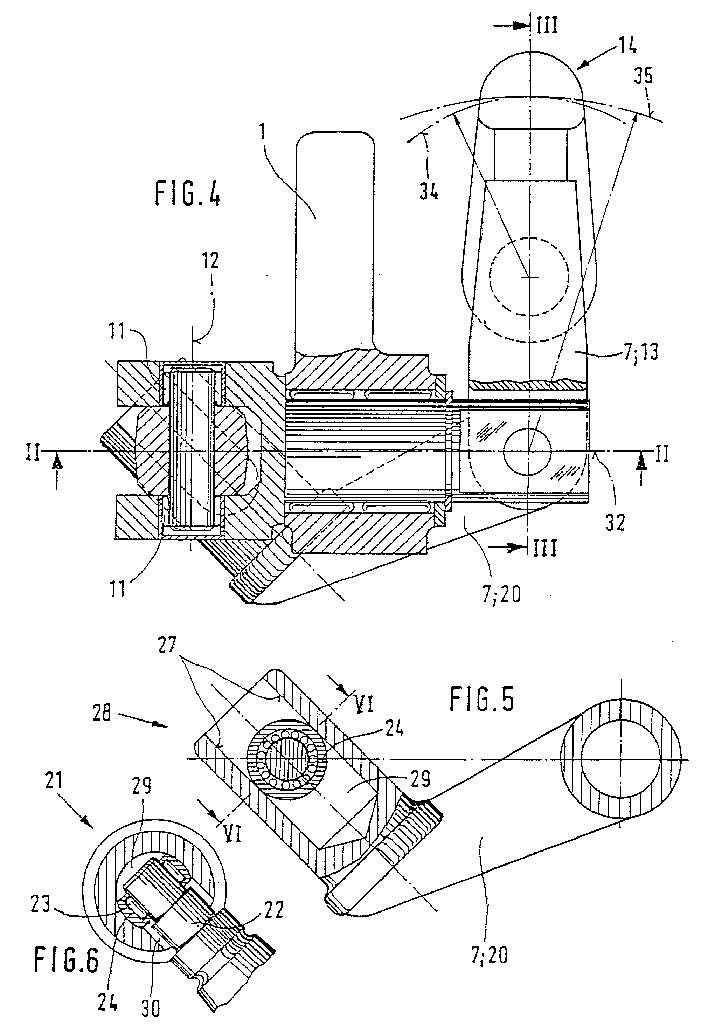

Fig. 4, 5 und 7 je eine Draufsicht, teilweise geschnitten.

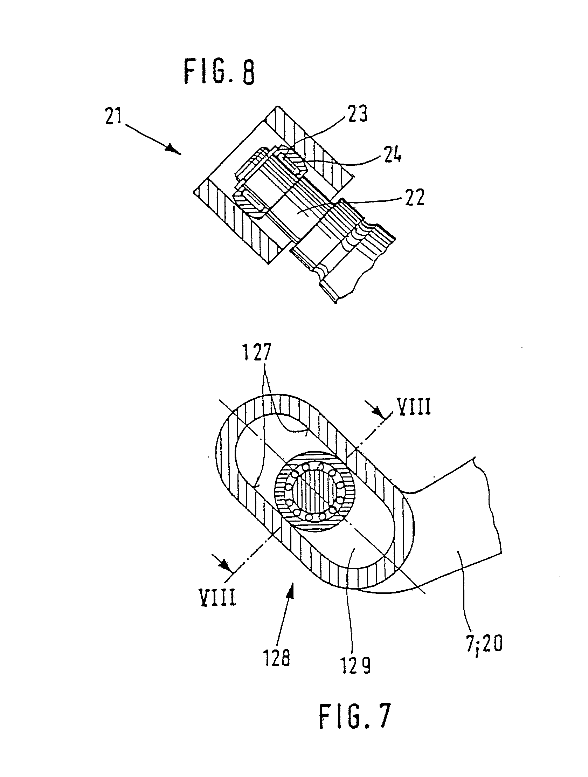

In einem Gehäuse 1 ist eine senkrecht angeordnete Drehwelle 2 in zwei Wälzlagern 3 – die Zeichnung zeigt nur das obere der beiden Wälzlager 3 – drehbar und axial gleitbeweglich gelagert. Am oberen Ende der Drehwelle 2 ist ausserhalb des Gehäuses 1 ein Anlenkhebel 4 befestigt. Quer zur Drehwelle 2 und nahe dem Anlenkhebel 4 ist eine Koppelwelle 5 über zwei Wälzlager 6 drehbar und axial fest am Gehäuse 1 gelagert. Auf einem Ende der Koppelwelle 5 ist ein Winkelhebel 7 in zwei Wälzlagern 8 drehbar und axial fest gelagert in einer Achse 9, die zur Drehwelle 2 im wesentlichen parallel verläuft. Auf dem anderen Ende der Koppelwelle 5 ist ein Handschalthebel 10 in zwei Wälzlagern 11 drehbar und axial fest gelagert in einer Achse 12, die zur Achse 9 und damit auch zur Drehwelle 2 quer verläuft. Ein erster Hebelarm 13 des Winkelhebels 7 ist über ein erstes Universalgelenk 14 mit dem Anlenkhebel 4 verbunden. Das Gelenk 14 besteht aus einem Kugelring 15 und einem Hohlkugelring 16. Der Kugelring 15 gleitet im Hohlkugelring 16 und axial auf einem fest mit dem Arm 13 verbundenen Bolzen 39. Der Hohlkugelring 16 sitzt fest in einer Bohrung 17 des Anlenkhebels 4. Das Gelenk 14 wird nach aussen abgedichtet durch eine axial vorgespannte gummielastische Hülse 18 zwischen dem Hohlkugelring 16 und einem Bund 19 am Arm 13. Ein zweiter Hebelarm 20 des Winkelhebels 7 ist über ein zweites Universalgelenk 21 mit einem Anlenkarm 22 am unteren Ende des Handschalthebels 10 verbunden. Das Gelenk 21 ist ein Wälzlager 23 mit einem Kugeligen Aussenring 24. Der Aussenring 24 rollt entlang einer Wand 27 oder 127 mit geringem Spiel zu einer parallel gegenüberliegenden Wand 27 oder 127 einer Schrägführung 28 oder 128, die aus einer Bohrung 29 mit einem seitlichen Schlitz 30 oder aus einem Langloch 129 am Ende des Armes 20 besteht. Das Wälzlager 23 ist auf dem Anlenkarm 22 axial beweglich (Ausführungsbeispiel nach Anspruch 6, Fig. 1 bis 6) oder axial fest (Ausführungsbeispiel nach Anspruch 7, Fig. 7 und 8) angeordnet. Das Gelenk 21 ist durch eine (nicht dargestellte) gummielastische Manschette umschlossen, die den Anlenkarm 22 des Handschalthebels 10 mit dem Arm 20 des Winkelhebels 7 verbindet. Die Koppelwelle 5 ist in Fahrzeuglängsrichtung angeordnet. Der Handschalthebel 10 trägt an seinem oberen Ende einen Handgriff 31.

Wird der Handgriff 31 quer zur Fahrzeuglängsrichtung bewegt (Doppelpfeil 38), so dreht sich die Koppelwelle 5 und mit ihr der Winkelhebel 7 mit seinem Arm 13 um die Achse 32 der Koppelwelle 5, so bewegt sich das Gelenk 14 zwischen dem Arm 13 und dem Anlenkhebel 4 in senkrechter Richtung, und die Drehwelle 2 wird axial verschoben. Richtung und Länge des Weges des Gelenks 14 sind festgelegt durch eine (nicht dargestellte) gehäusefeste Kulisse und einen in dieser Kulisse geführten (nicht dargestellten) drehwellenfesten Führungsstift. Der Kugelring 15 des Gelenks 14 gleitet axial auf dem Bolzen 25, weil dieser Bolzen 25 sich auf einem zur Koppelwelle 5 konzentrischen Kreisbogen 33 und das Gelenk 14 sich auf einer Geraden 37 parallel zur Achse 26 der Drehwelle 2 bewegt. Wird der Handgriff 31 in Fahrzeuglängsrichtung bewegt (Doppelpfeil 39), so rollt der Aussenring 24 des Wälzlagers 23 des Gelenks 21 entlang einer Wand 27 oder 127 der Schrägführung 28 oder 128 am Ende des Armes 20 des Winkelhebels 7, so dreht sich der Winkelhebel 7 um seine Achse 9, so bewegt sich das Gelenk 14 zwischen dem Arm 13 und dem Anlenkhebel 4 auf einem zur Drehwelle 2 konzentrischen Kreisbogen 34, und die Drehwelle 2 wird verdreht. Richtung und Länge des Weges des Gelenks 14 sind festgelegt durch eine (nicht dargestellte) gehäusefeste Kulisse und einen in dieser Kulisse geführten (nicht dargestellten) drehwellenfesten Führungsstift. Der Kugelring 15 des Gelenks 14 gleitet axial auf dem Arm 13, weil dieser Arm 13 sich auf einem zur Achse 9 des Winkelhebels 7 konzentrischen Kreisbogen 35 und damit auf einer etwas anderen Bahn als das Gelenk 14 bewegt. Bei dem Ausführungsbeispiel nach Anspruch 6, Fig. 1 bis 6, gleitet auch das Wälzlager 23 axial auf dem Anlenkarm 22, weil sich das Gelenk 21 entlang der geraden Bohrung 29, der Anlenkarm 22 aber auf einem zur Achse 12 des Handschalthebels 10 konzentrischen Kreisbogen 36 und damit auf einer etwas anderen Bahn als das Gelenk 21 bewegt.

Während die Bewegungsbahnen des Gelenks 14 innerhalb einer Zylinderfläche liegen, verlaufen die Bewegungsbahnen des Handgriffs 31 innerhalb einer Kugelfläche.

Die durch die (nicht dargestellte) gehäusefeste Kulisse und den (nicht dargestellten) drehwellenfesten Führungsstift an der Drehwelle 2 festgelegten Bewegungsbahnen des Gelenks 14 werden durch das erfindungsgemässe Verbindungsgestänge, im wesentlichen bestehend aus dem Winkelhebel 7, der Koppelwelle 5 und dem kardanisch gelagerten Handschalthebel 10 nur wenig verzerrt, das (nicht dargestellte) Schaltbild am Handgriff 31 entspricht sehr weitgehend dem (nicht dargestellten) Schaltbild des Führungsstiftes in der Kulisse.

Durch Änderung des Schrägwinkels der Schrägführung 28 oder 128 und/oder der Länge des Hebelarms 20 und/oder der Länge des Hebelarms 13 und/oder der Länge des Anlenkhebels 4 können die Schaltwege des Handgriffs 31 im Verhältnis zu den Schaltwegen des (nicht dargestellten) drehwellenfesten Führungsstiftes in der (nicht dargestellten) gehäusefesten Kulisse leicht verändert werden.

Bezugszeichen

| | |
|---|---|
| 1 | Gehäuse |
| 2 | Drehwelle |
| 3 | Wälzlager |
| 4 | Anlenkhebel |
| 5 | Koppelwelle |
| 6 | Wälzlager |
| 7 | Winkelhebel |
| 8 | Wälzlager |
| 9 | Achse |
| 10 | Handschalthebel |
| 11 | Wälzlager |
| 12 | Achse |
| 13 | erster Hebelarm, Arm, Hebel |
| 14 | erstes Universalgelenk, Gelenk |
| 15 | Kugelring |
| 16 | Hohlkugelring |
| 17 | Bohrung |
| 18 | Hülse |
| 19 | Bund |
| 20 | zweiter Hebelarm, Arm |
| 21 | zweites Universalgelenk, Gelenk |
| 22 | Anlenkarm |
| 23 | Wälzlager |
| 24 | Aussenring |
| 25 | Bolzen |
| 26 | Achse |
| 27, 127 | Wand |
| 28, 128 | Schrägführung |
| 29, 129 | Bohrung oder Langloch |
| 30 | Schlitz |
| 31 | Handgriff |
| 32 | Achse |
| 33 | Kreisbogen |
| 34 | Kreisbogen |
| 35 | Kreisbogen |
| 36 | Kreisbogen |
| 37 | Gerade |
| 38 | Doppelpfeil |
| 39 | Doppelpfeil |

Patentansprüche

1. Schalteinrichtung, insbesondere für Fahrzeug-Zahnradgetriebe, mit einer senkrecht in einem Gehäuse angeordneten Drehwelle mit einem an deren oberen Ende befestigten, ausserhalb des Gehäuses angeordneten Anlenkhebel, mit einem oberhalb der Drehwelle kardanisch an dem Gehäuse angelenkten Handschalthebel, und mit einem Verbindungsgestänge zwischen dem Handschalthebel und der Drehwelle, dadurch gekennzeichnet, dass
— der Handschalthebel (10) und ein Winkelhebel (7) auf einer gemeinsamen Koppelwelle (5) mit Abstand zueinander auf zwei sich kreuzenden Achsen (9, 12) gelagert sind,
— die Koppelwelle (5) in geringem Abstand zur Achse (38) der Drehwelle (2) am Gehäuse (1) gelagert ist,
— ein erster Hebelarm (13) des Winkelhebels (7) mit dem Anlenkhebel (4) der Drehwelle (2) verbunden ist über ein erstes Universalgelenk (14), das mit einem der beiden Hebel (4 oder 13) fest verbunden und zu dem anderen Hebel (13 oder 4) drehbar und axial verschieblich ist,
— ein zweiter Hebelarm (20) des Winkelhebels (7) mit einem Anlenkarm (22) des Handschalthebels (10) verbunden ist über ein zweites Universalgelenk (21), das auf einem der beiden Arme (20 oder 22) axial verschieblich oder fest angeordnet und zu dem anderen Arm (22 oder 20) entlang einer Schrägführung (28 oder 128) an diesem anderen Arm (22 oder 20) beweglich ist.

2. Schalteinrichtung nach Anspruch 1, dadurch gekennzeichnet, dass die Drehwelle (2) in dem Gehäuse (1) in zwei Wälzlagern (3) drehbar und axial gleitbeweglich gelagert ist.

3. Schalteinrichtung nach Anspruch 1 oder 2, dadurch gekennzeichnet, dass die Koppelwelle (5) an dem Gehäuse (1) in zwei dauergeschmierten und abgedichteten Wälzlagern (6) axial fest gelagert ist.

4. Schalteinrichtung nach Anspruch 1, 2 oder 3, dadurch gekennzeichnet, dass der Handschalthebel (10) und der Winkelhebel (7) auf der Koppelwelle (5) in je zwei dauergeschmierten und abgedichteten Wälzlagern (11, 6) axial fest gelagert sind.

5. Schalteinrichtung nach Anspruch 1, 2, 3 oder 4, dadurch gekennzeichnet, dass das erste Universalgelenk (14) ein Kugelgleitgelenk ist mit einem Kugelring (15) und einem Hohlkugelring (16).

6. Schalteinrichtung nach einem der vorangehenden Ansprüche, dadurch gekennzeichnet, dass
— das zweite Universalgelenk (21) ein Wälzlager (23) ist mit einem kugeligen Aussenring (24),
— die Schrägführung (28) eine Bohrung (29) ist in dem einen der beiden durch das zweite Universalgelenk (21) verbundenen Arme (20 oder 22) mit einem längs der Bohrung (29) verlaufenden Schlitz (30), durch den der andere Arm (22 oder 20) mit dem darauf axial verschieblichen Wälzlager (23) hindurchtaucht,
— der kugelige Aussenring (24) längs der Bohrung (29) in der Bohrung (29) rollt.

7. Schalteinrichtung nach einem der Ansprüche 1 bis 5, dadurch gekennzeichnet, dass
— das zweite Universalgelenk (21) ein Wälzlager (23) ist mit einem kugeligen Aussenring (24) und einem zu diesem Aussenring (24) axial festgehaltenen Käfig (25) mit Wälzkörpern (26),
— die Schrägführung (128) ein Langloch (129) ist in dem einen der beiden durch das zweite Universalgelenk (21) verbundenen Arme (20 oder 22), in welches Langloch (129) der andere Arm (22 oder 20) mit dem darauf axial festgehaltenen Wälzlager (23) eintaucht,
— der kugelige Aussenring (24) längs dem Langloch (129) in dem Langloch (129) rollt.

8. Schalteinrichtung nach einem der Ansprüche 6 oder 7, dadurch gekennzeichnet, dass eine gummielastische Manschette das zweite Universalgelenk (21) umschliesst und die beiden zugehörigen Arme (20, 22) miteinander verbindet.

## Claims

1. Gearshift device, in particular for vehicle gear drives, comprising a rotary shaft, which is vertically arranged in a housing and to the upper end of which an articulated lever, disposed outside the housing, is secured, a gearshift lever, which is coupled to the housing above the rotary shaft by a Cardan joint, and a linkage between the gearshift lever and the rotary shaft, characterised in that the gearschift lever (10) and a bell crank lever (7) are mounted on a common connecting shaft (5) at a spacing from one another along two intersecting axes (9, 12), the connecting shaft (5) is mounted at a small spacing from the axis (38) of the rotary shaft (2) on the housing (1), a first lever arm (13) of the bell crank lever (17) is connected to the articulated lever (4) of the rotary shaft (1) via a first universal joint (14), which is rigidly connected to one of the two levers (4 or 13) and can be rotated and moved in the axial direction in relation to the other lever (13 or 4), and that a second lever arm (20) of the bell crank lever (7) is connected to an articulated arm (22) of the gearshift lever (10) via a second universal joint (21), which is arranged on one of the two arms (20 or 22) in an axially displaceable or rigid manner and can be moved in relation to the other arm (22 or 20) along an inclined guide (28 or 128) at this other arm (22 or 20).

2. Gearshift device according to claim 1, characterised in that the rotary shaft (2) is mounted in the housing (1) in two roller bearings (3) so that it can rotate and slide in the axial direction.

3. Gearshift device according to claim 1 or 2, characterised in that the connecting shaft (5) is mounted on the housing (1) in two permanently lubricated and sealed roller bearings (6) so that it cannot move in the axial direction.

4. Gearshift device according to claim 1, 2 or 3, characterised in that the gearshift lever (10) and the bell crank lever (7) are mounted on the connecting shaft (5) in two permanently lubricated and sealed roller bearings (11, 6) so that they cannot move in the axial direction.

5. Gearshift device according to claim 1, 2, 3 or 4, characterised in that the first universal joint (14) is a spherical slip joint with a ball race (15) and a hollow ball race (16).

6. Gearshift device according to one of the preceding claims, characterised in that the second universal joint (21) is a roller bearing (23) with a spherical outer race (24), the inclined guide (28) is a bore (29) in one of the two arms (20 or 22), which are connected by the second universal joint (21), which a slot (30) extending along the bore (29), through which slot the other arm (22 or 20) with the roller bearing (23), which is axially displaceable on the latter, extends, and in that the spherical outer race (24) rolls along the bore (29) in the bore (29).

7. Gearshift device according to one of claims 1 to 5, characterised in that the second universal joint (21) is a roller bearing (23) comprising a spherical outer race (24) and a cage (25), which is axially secured with respect to this outer race (24), with roller members (26), the inclined guide (128) is an oblong hole (129) in one of the two arms (20 or 22), which are connected by the second universal joint (219), into which oblong hole (129) the other arm (22 or 20) with the roller bearing (23), which is axially secured on the latter, extends, and in that the spherical outer race (24) rolls along the oblong hole (129) in the oblong hole (129).

8. Gearshift device according to one of claims 6 or 7, characterised in that a rubber elastic sleeve encloses the second universal joint (21) and connects the two associated arms (20, 22).

## Revendications

1. Dispositif de changement de vitesses, en particulier pour boîte de vitesses à pignon denté de véhicules à moteur, comportant un arbre d'entraînement rotatif disposé verticalement dans une boîte, un levier articulé disposé à l'extérieur de la boîte et monté à l'extrémité supérieure dudit arbre d'entraînement rotatif, un levier de commande manuelle des vitesses monté par cardan à la boîte et disposé au-dessus dudit arbre d'entraînement rotatif, et une tringlerie de transmission reliant le levier de commande manuelle des vitesses audit arbre d'entraînement rotatif, caractérisé en ce que
— le levier de commande manuelle des vitesses (10) et un levier coudé (7) sur un axe de couplage (5) commun sont fixés à distance l'un par rapport à l'autre sur deux des axes croisés (9, 12),
— l'axe de couplage (5) est monté à faible distance de l'axe (38) de l'arbre d'entraînement rotatif (2), sur la boîte (1),
— un premier bras de levier (13) du levier coudé (7) est lié au levier articulé (4) de l'arbre d'entraînement rotatif (2) au-dessus d'un premier joint universel (14) qui est lié rigidement à l'un des deux leviers (4 ou 13) et qui peut se déplacer en rotation ou coulisser axialement le long de l'autre levier (13 ou 4),
— un deuxième bras de levier (20) du levier coudé (7) est lié à un bras articulé (22) du levier de commande manuel des vitesses (10) par l'intermédiaire d'un deuxième joint universel (21) qui peut coulisser axialement ou qui est fixé rigidement sur l'un des deux bras (20 ou 22) et qui peut coulisser dans un guide incliné (28 ou 128) le long de l'autre bras (22 ou 20).

2. Dispositif de changement de vitesses selon la revendication 1, caractérisé en ce que l'arbre d'entraînement rotatif (2) est monté dans la boîte (1) au moyen de deux roulements à cylindre (3) de manière à tourner et à pouvoir coulisser axialement.

3. Dispositif de changement de vitesses selon les revendications 1 ou 2, caractérisé en ce que l'axe de couplage (5) est monté dans des positions axiales fixes dans la boîte (1) au moyen de roulements à cylindre lubrifiés en permanence et étanches.

4. Dispositif de changement de vitesses selon les revendications 1, 2 ou 3, caractérisé en ce que la commande manuelle des vitesses (10) et le levier coudé (7) sont montés dans des positions axiales fixes sur l'arbre d'entraînement rotatif (5) au moyen de deux roulements à cylindre respectifs (11, 6) lubrifiés en permanence et étanches.

5. Dispositif de changement de vitesses selon les revendications 1, 2, 3 ou 4, caractérisé en ce que le premier joint universel (14) est un joint coulissant à rotule comprenant un anneau de roulement (15) et un chemin de roulement creux (16).

6. Dispositif de changement de vitesses selon l'une quelconque des revendications précédentes, caractérisé en ce que
— le deuxième joint universel (21) est un roulement à cylindre (23) comportant une bague extérieure de roulement de forme sphérique (24),
— le guide incliné (28) est un alésage (29) dans lequel l'un des deux bras (20 ou 22) relié par ledit deuxième joint universel (21) comporte une fente (30) disposée le long dudit alésage (29), l'autre bras (22 ou 20) portant ledit roulement à cylindre (23) mobile axialement,
— la bague extérieure de roulement de forme sphérique (24) roule le long de l'alésage (29) à l'intérieur de cet alésage (29).

7. Dispositif de changement de vitesses selon l'une des revendications 1 à 5, caractérisé en ce que
— le deuxième joint universel (21) est un roulement à cylindre (23) comportant une bague extérieure de roulement de forme sphérique (24) et une cage (25) contenant des organes de roulement cylindriques (26), cette cage étant fixée axialement sur cette bague extérieure de roulement (24),
— le guide incliné (128) est un trou oblong (129) dans lequel est fixé l'un des deux bras (20 ou 22) couplé par l'intermédiaire du deuxième joint universel (21), et dans lequel est engagé l'autre bras (22 ou 20) portant ledit roulement à cylindre (23) fixé axialement,
— la bague extétieure de roulement de forme sphérique (24) roule à l'intérieur du trou oblong (129), le long de ce trou.

8. Dispositif de changement de vitesses selon l'une des revendications 6 ou 7, caractérisé en ce qu'une manchette élastique recouvre le deuxième joint universel (21) et lie les deux bras correspondants (20 ou 22) l'un à l'autre.

FIG.1

0 221 071

FIG.2

FIG.3

9

FIG.4

FIG.5

FIG.6

# FIG. 8

21    23

24

22

# FIG. 7

127    VIII

VIII

128    129    7;20